# EUROPÄISCHE PATENTANMELDUNG

(11) **EP 3 663 011 A1**
(43) Veröffentlichungstag der Anmeldung: **10.06.2020**
(21) Anmeldenummer: 18210501.5
(22) Anmeldetag: 05.12.2018
(51) Int. Cl.: B21B 31/07, B21B 38/00

(54) **ERFASSEN UND ÜBERTRAGEN VON DATEN EINES LAGERS EINES STAHL- ODER WALZWERKS**

(71) Anmelder: Primetals Technologies Austria GmbH, 4031 Linz (AT)
(72) Erfinder: Hohenbichler, Gerald, 4484 Kronstorf (AT); Rohrhofer, Andreas, 4020 Linz (AT)
(74) Vertreter: Metals@Linz

(57) **Zusammenfassung**

Gezeigt wird eine Vorrichtung zum Erfassen und Übertragen von Daten eines Lagers (13) eines Stahl- oder Walzwerks, die Vorrichtung zumindest umfassend
- ein Lagergehäuse (14) für ein Lager (13) für drehbare Bauteile (19),
- einen Sensor mit einer Datenverarbeitungseinheit, welche beide im Lagergehäuse (14) angeordnet sind und zum Erfassen und Speichern von Daten des Lagers (13) ausgebildet sind,
- eine Datenübertragungseinheit, welche im Lagergehäuse (14) angeordnet ist und zum drahtlosen Übertragen von Daten des Sensors an einen entfernten Empfänger ausgebildet ist,
- eine Energieempfangseinheit, welche im Lagergehäuse (14) angeordnet ist und welche ausgebildet ist, drahtlos Energie zu empfangen und an die Datenübertragungseinheit und die Datenverarbeitungseinheit weiterzuleiten,
- eine Energiequelle (25) mit einer Energiesendeeinheit (22), welche ausgebildet ist, die Energieempfangseinheit drahtlos mit Energie zu versorgen, wobei vorgesehen ist,
- dass Energiequelle (25) und Energiesendeeinheit (22) außerhalb eines Lagergehäuses (14) angeordnet sind, und
- dass die Energiesendeeinheit (22) an oder in einem Konstruktionsteil (20) angeordnet ist, der Teil der Stützkonstruktion (21) des Stahl- oder Walzwerks ist.

## Beschreibung

### Technisches Gebiet

Die Erfindung betrifft eine Vorrichtung zum Erfassen und Übertragen von Daten eines Lagers eines Stahl- oder Walzwerks, die Vorrichtung zumindest umfassend
- ein Lagergehäuse für ein Lager für drehbare Bauteile,
- einen Sensor mit einer Datenverarbeitungseinheit, welche beide im Lagergehäuse angeordnet sind und zum Erfassen und Speichern von Daten des Lagers ausgebildet sind,
- eine Datenübertragungseinheit, welche im Lagergehäuse angeordnet ist und zum drahtlosen Übertragen von Daten des Sensors an einen entfernten Empfänger ausgebildet ist,
- eine Energieempfangseinheit, welche im Lagergehäuse angeordnet ist und welche ausgebildet ist, drahtlos Energie zu empfangen und, in der Regel kabelgebunden, an die Datenübertragungseinheit und die Datenverarbeitungseinheit weiterzuleiten, und
- eine Energiequelle mit einer Energiesendeeinheit, welche ausgebildet ist, die Energieempfangseinheit drahtlos mit Energie zu versorgen.

Der drehbare Bauteil kann die Walze eines Walzwerks oder die Rolle einer Strangführung einer Stranggießanlage oder die Rolle einer Bandführung einer Bandgießanlage sein, oder andere betriebskritische Bauteile, die deshalb online überwacht werden sollten, wie etwa Haspeldorne, Gelenkwellen, Planheitsmessrollen, rotierende Düsenköpfe zur Entzunderung (engl. rotary descaler), Scherentrommel. Das Lagergehäuse nimmt das eigentliche Lager auf und ist in der Regel lösbar mit einer Stützkonstruktion, z.B. des Stahl- oder Walzwerks, verbunden, damit das Lagergehäuse zur Wartung des Lagers oder des Lagergehäuses aus der Stützkonstruktion ausgebaut und an einen anderen Ort gebracht werden kann. Das Lager kann ein Wälzlager, ein Rollenlager, ein Gleitlager oder ein Gelenk sein.

### Stand der Technik

Um die Belastung eines Lagers, insbesondere in einem Stahl- oder Walzwerk, über die Zeit zu erfassen, werden entweder die Lager von Anfang an mit entsprechenden Sensoren ausgestattet, oder es werden temporär Sensoren eingebaut, die über Kabel und Schleifringe mit Energie versorgt werden, wobei auch die Daten über Kabel und Schleifringe aus dem Sensor im Lager übertragen werden. Verkabelungen sind für den Dauerbetrieb nicht geeignet, da sie im Betrieb und bei der Wartung stören bzw. beschädigt werden können.

Aus der US 7394395 B2 ist ein Sensor in einem Lagergehäuse einer Gießanlage oder Walzanlage bekannt, der Zustandsdaten des Lagers drahtlos überträgt. Zur Energieversorgung des Sensors sind entweder Batterien im Lagergehäuse (Fig. 4A, 4B, 16) vorgesehen, oder ein Generator im Lagergehäuse (Fig. 17), oder eine Energiequelle der Datenübertragungseinheit, die am oder im Lagergehäuse (Fig. 17) angeordnet ist.

Batterien im Lagergehäuse sind nachteilig, weil sie durch kurzzeitige Überhitzung, wie dies in einem Stahl- oder Walzwerk vorkommt, geschädigt werden können. Zudem werden die Lagergehäuse im Hinblick auf die Belastungen der drehbaren Bauteile ausgelegt und bieten daher nur sehr beschränkt Platz, etwa in Form von Hohlräumen, für Batterien oder Generatoren. Das Anordnen einer Energiequelle an einer beliebigen Stelle außerhalb des Lagergehäuses birgt ebenfalls die Gefahr der Beeinträchtigung durch Prozesswärme.

### Aufgabe der Erfindung

Es ist daher eine Aufgabe der vorliegenden Erfindung die Nachteile des Stands der Technik zu überwinden und eine Vorrichtung zum Erfassen und Übertragen von Daten eines Lagers eines Stahl- oder Walzwerks vorzuschlagen, die keine Energiequelle innerhalb des Lagergehäuses aufweist, dennoch eine dauerhafte Energieversorgung von Datenübertragungseinheit und die Datenverarbeitungseinheit sicherstellt und vorzugsweise die Wartung des Lagers bzw. Lagergehäuses erleichtert.

### Darstellung der Erfindung

Diese Aufgabe wird erfindungsgemäß gelöst durch eine Vorrichtung nach Anspruch 1. Anspruch 1 geht aus von einer Vorrichtung zumindest umfassend
- ein Lagergehäuse für ein Lager für drehbare Bauteile,
- einen Sensor mit einer Datenverarbeitungseinheit, welche beide im Lagergehäuse angeordnet sind und zum Erfassen und Speichern von Daten des Lagers ausgebildet sind,
- eine Datenübertragungseinheit, welche im Lagergehäuse angeordnet ist und zum drahtlosen Übertragen von Daten des Sensors an einen entfernten Empfänger ausgebildet ist,
- eine Energieempfangseinheit, welche im Lagergehäuse angeordnet ist und welche ausgebildet ist, drahtlos Energie zu empfangen und (in der Regel kabelgebunden) an die Datenübertragungseinheit und die Datenverarbeitungseinheit weiterzuleiten,
- eine Energiequelle mit einer Energiesendeeinheit, welche ausgebildet ist, die Energieempfangseinheit drahtlos mit Energie zu versorgen.

Dabei ist vorgesehen,
- dass Energiequelle und Energiesendeeinheit außerhalb eines Lagergehäuses angeordnet sind, und
- dass die Energiesendeeinheit an oder in einem Konstruktionsteil angeordnet ist, der an das Lagergehäuse angrenzt und Teil der Stützkonstruktion des Stahl- oder Walzwerks ist.

Insbesondere kann vorgesehen sein, dass der Konstruktionsteil ausgebildet ist, bei Ausbau des Lagergehäuses zu Wartungszwecken an der Stützkonstruktion des Stahl- oder Walzwerks zu verbleiben.

Energiequelle und Energiesendeeinheit sind außerhalb des Lagergehäuses angeordnet, wobei die Energiesendeeinheit vorzugsweise so montiert ist, dass sie beim Ausbau des Lagergehäuses vor Ort an der Stützkonstruktion des Stahl- oder Walzwerks verbleibt, und keine eigenen Schritte zur Demontage der Energiesendeeinheit vom Lagergehäuse gesetzt werden müssen. Die Energiequelle, die in der Regel noch weiter vom Lagergehäuse entfernt ist als die Energiesendeeinheit, wird folglich beim Ausbau des Lagergehäuses ebenfalls vor Ort verbleiben, z.B. in der Stützkonstruktion des Stahl- oder Walzwerks. Wenn die Energiequelle noch weiter vom Lagergehäuse entfernt ist als die Energiesendeeinheit, ist sichergestellt, dass die Energiequelle jedenfalls geringerer thermischer Belastung ausgesetzt ist, wodurch eine dauerhafte Energieversorgung sichergestellt ist.

Das Lagergehäuse kann aus Stahl gefertigt sein. Das Lagergehäuse kann ein Strangführungslager einer Vorblock- oder Brammen-Stranggießanlage sein.

Als Sensoren kommen z.B. Sensoren zur Messung der Temperatur, des Drucks, der Beschleunigung (z.B. Triax-Beschleunigungsgeber) und der Kraft in Frage. Der Kraftsensor kann z.B. auf dem Piezoprinzip basieren oder auf dem Prinzip kapazitiver (dielektrischer) Messtechnik. Falls eine Schmierung oder eine Kühlung des Lagers bzw. des drehbaren Bauteils vorgesehen sind, kann auch ein Sensor zur Überwachung der Schmierung bzw. zur Messung des Kühlmitteldurchflusses vorgesehen sein. Grundsätzlich kommen alle Sensoren in Frage, die ein elektronisch verarbeitbares Signal liefern.

Die Datenverarbeitungseinheit umfasst in der Regel zumindest einen Prozessor (CPU) und einen Speicher, z.B. einen Speicherchip, und ist in der Regel über Kabel und/oder Leiterbahnen einer Leiterplatte mit dem oder den Sensoren verbunden. In der Datenverarbeitungseinheit können die Messdaten vorverarbeitet, digitalisiert und zwischengespeichert werden.

Die Datenübertragungseinheit umfasst in der Regel eine Antenne, die mit der Datenverarbeitungseinheit, z.B. über ein Kabel oder eine Leiterbahn einer Leiterplatte, verbunden ist. Die Datenübertragungseinheit überträgt z.B. Daten wie Überlasten, zeitliche Mittelwerte, Standardabweichungen, Peakto-Peak-Werte, gemeinsam mit einer eindeutigen Identifikation (ID) und gegebenenfalls einem Zeitstempel an den entfernten Empfänger, z.B. ein Lesegerät mit entsprechender Antenne. Der Empfänger kann z.B. ein bis fünf Meter, vorzugsweise weniger als dreißig Meter, besonders bevorzugt weniger als zehn Meter, vom Lagergehäuse entfernt sein. Die Datenübertragungseinheit kann z.B. Signale mit einer Frequenz von mehr als 800 MHz, insbesondere mehr als 2,4 GHz, an den Empfänger senden. Die hohen Übertragungsfrequenzen sind nötig, um gesicherte Datenkanäle zu erhalten und um falsche Signalzuordnungen oder Interferenzfehler zu vermeiden. Die Datenübertragung von der Datenübertragungseinheit an den Empfänger kann in vorgegebenen Zeitintervallen, z.B. jede Sekunde oder alle 5, 10, oder 30 Sekunden, oder alle 60 oder mehr Sekunden, oder auf Anfrage des Empfängers erfolgen. Der Empfänger kann Daten von mehreren Datenübertragungseinheiten verarbeiten. Der Empfänger, bzw. ein mit diesem verbundener Sender, kann die Daten anschließend in eine Datenwolke (Datencloud) weitersenden, wo diese dann gespeichert, weiterverarbeitet und für die Überwachung und Steuerung der drehbaren Bauteile verwendet werden können.

Die Energieempfangseinheit wird die drahtlos empfangene Energie in der Regel über ein Kabel oder eine Leiterbahn einer Leiterplatte an die Datenübertragungseinheit, den Speicher und die Datenverarbeitungseinheit weiterleiten.

Die Datenverarbeitungseinheit, also etwa CPU und Speicher, und die Datenübertragungseinheit, also etwa die Antenne, und die Energieempfangseinheit können auf einer gemeinsamen Leiterplatte realisiert sein. Diese gemeinsame Leiterplatte kann physisch aus mehreren Untereinheiten aufgebaut sein, die mechanisch miteinander verbunden sind. Die gemeinsame Leiterplatte hat vorzugsweise eine Fläche von weniger als 4000 mm², ist also z.B. weniger als 50x80 mm groß. Die Leiterplatte hat noch bevorzugter eine Fläche von weniger als 3000 mm², also z.B. weniger als 40x75 mm, noch mehr bevorzugt weniger als 1800 mm², ist also z.B. weniger als 30x60 mm groß. Auf diese Weise findet die Leiterplatte in einer sehr kleinen Ausnehmung des Lagergehäuses Platz. In dieser Hinsicht ist auch vorteilhaft, wenn die Leiterplatte samt den darauf befindlichen elektronischen Bauteilen weniger als 18 mm hoch, insbesondere weniger als 13 mm hoch, besonders bevorzugt weniger als 9 mm hoch ist.

Entsprechend kann vorgesehen sein, dass die gemeinsame Leiterplatte in einer Ausnehmung des Lagergehäuses angeordnet ist, welche Ausnehmung einen größten Querschnitt von kleiner 4000 mm², bevorzugt von kleiner 3000 mm², besonders bevorzugt von kleiner 1800 mm² aufweist.

Die Energiequelle kann mit der Energiesendeeinheit über ein Kabel verbunden sein, z.B. über ein zwei- oder dreiadriges Kabel. Die Energiequelle kann eine Batterie mit einer Spannung zwischen 5 und 48 V sein, z.B. mit 5 V, 9 V, 12 V, 24 V oder 48 V. Die Energiquelle und/oder die Energiesendeeinheit verfügt in der Regel über einen DC-AC-Wandler.

In einer ersten bevorzugten Ausführungsform der erfindungsgemäßen Vorrichtung ist vorgesehen, dass die Energiesendeeinheit vom Lagergehäuse bedeckt ist. Das heißt, das Lagergehäuse schirmt die Energiesendeeinheit von dem - im Lager des Lagergehäuses gelagerten - drehbaren Bauteil ab, welcher Bauteil in einem Walz- oder Stahlwerk oft einer großen thermischen Belastung ausgesetzt ist. Mit anderen Worten ist im Betrieb der erfindungsgemäßen Vorrichtung das Lagergehäuse zwischen Energiesendeeinheit und drehbarem Bauteil angeordnet, in Richtung normal zur Drehachse des drehbaren Bauteils gesehen.

Um einen kurzen Übertragungsweg zwischen Energieempfangseinheit im Lagergehäuse und Energiesendeeinheit im Konstruktionsteil zu erreichen, kann vorgesehen sein, dass Energieempfangseinheit im Lagergehäuse und die Energiesendeeinheit im Konstruktionsteil jeweils oberflächennahe und nahe zueinander angeordnet sind. Die Energieempfangseinheit ist also nahe an jener Oberfläche des Lagergehäuses angeordnet, die dem Konstruktionsteil zugewandt ist, während die Energiesendeeinheit nahe an jener Oberfläche des Konstruktionsteils angeordnet ist, die dem Lagergehäuse zugewandt ist. Der gegenseitige Abstand von Energieempfangseinheit und Energiesendeeinheit sollte möglichst gering sein, z.B. zwischen 0 bis 100 mm, inbesondere zwischen 0,1 bis 8 mm, besonders bevorzugt zwischen 0,2 bis 3 mm. In Richtung der Drehachse des drehbaren Bauteils sollten sich dabei Energieempfangseinheit und Energiesendeeinheit überlappen, bevorzugt decken. Es ist aber nicht ausgeschlossen, dass sich Energieempfangseinheit und Energiesendeeinheit nicht überlappen, die Energiesendeeinheit alo etwa neben dem Lagergehäuse angeordnet ist.

Eine Ausgestaltung der Erfindung besteht darin, dass die Energiesendeeinheit in einer Ausnehmung des Konstruktionsteils angeordnet ist, die im Betriebszustand der Vorrichtung zum Lagergehäuse hin ausgerichtet ist. In diesem Fall ist also kein Material des Konstruktionsteils zwischen Energiesendeeinheit und dem Lagergehäuse vorgesehen, die Energieübertragung bis zum Lagergehäuse erfolgt über die Luft. Die Energiesendeeinheit könnte jedoch zum Schutz vor Umgebungseinflüssen in einen Kunststoff oder ein Harz eingegossen sein. Die Abmessungen der eingegossenen Energiesendeeinheit entsprechen dann vorzugsweise den Abmessungen der Ausnehmung insofern, dass die eingegossene Energiesendeeinheit entweder mit geringen Spaltmaßen oder kongruent formschlüssig in die Ausnehmung eingelegt oder durch eine Zugangsöffnung in die Ausnehmung gesteckt werden kann.

Entsprechend kann auch vorgesehen sein, dass die Energieempfangseinheit in einer Ausnehmung des Lagergehäuses angeordnet ist, die im Betriebszustand der Vorrichtung zum Konstruktionsteil hin ausgerichtet ist. Auf diese Weise ist sichergestellt, dass sich kein Material des Lagergehäuses zwischen Energieempfangseinheit und dem Konstruktionsteil befindet und die Energieübertragung bis zum Konstruktionsteil daher ungestört elektromagnetisch erfolgen kann.

Vorteilhaft ist, wenn sowohl die Energiesendeeinheit als auch die Energieempfangseinheit jeweils in einer entsprechenden Ausnehmung (also zur anderen Ausnehmung hin offen und ausgerichtet) angeordnet sind, weil dann die Energieübertragung gänzlich ungestört erfolgt und nicht durch Teile des Lagergehäuses oder des Konstruktionsteils gedämpft wird.

Im Falle einer Stranggießanlage kann vorgesehen sein, dass die Energiequelle eine Batterie eines Segments einer Stranggießanlage oder eine Wechselspannungsversorgung (z.B. mit 230 oder 400 V) eines Segments einer Stranggießanlage ist, das Segment umfassend eine oder mehrere Strangführungsrollen, und mittels einer elektrischen Leitung mit der Energiesendeeinheit verbunden ist.

Eine Ausführungsform der Erfindung besteht darin, dass Energiesendeeinheit und Energieempfangseinheit ausgebildet sind, Energie durch induktive Kopplung, insbesondere resonante induktive Kopplung, zu senden bzw. zu empfangen.

Bei der induktiven Energieübertragung wird im Sender mittels eines Oszillators ein magnetisches Wechselfeld erzeugt. Die Übertragung erfolgt mittels Gegeninduktion zwischen zwei Spulen, einer Spule im Sender und einer Spule im Empfänger. In der Empfangsspule wird durch den Wechselstrom in der Sendespule eine Wechselspannung induziert, diese wird in Anwendungen, wie dem Laden von Akkumulatoren, gleichgerichtet und als Gleichspannung dem Verbraucher zugeführt. Der Abstand zwischen den beiden Spulen stellt die drahtlose Übertragungsstrecke dar und sollte möglichst gering sein - typisch sind einige wenige Millimeter bis zu einigen 10 mm Abstand. Mit größer werdendem Abstand der beiden Spulen nimmt der Streufluss stark zu, womit die induktive Kopplung sinkt und der Wirkungsgrad sich verschlechtert. Typische Abstände, die mit diesem Verfahren überbrückt werden können, betragen ungefähr den Spulendurchmesser bis zum doppelten Spulendurchmesser, der verwendete Frequenzbereich reicht von einigen 10 kHz bis in den MHz-Bereich.

Die resonante induktive Kopplung stellt eine Erweiterung der induktiven Kopplung dar, um die nur geringe Reichweite zu vergrößern. Dazu werden in der Freiraumstrecke zwischen Sende- und Empfangsspule ein oder mehrere freie Schwingkreise angebracht. Jeder dieser Schwingkreise besteht aus einem Kondensator und einer Spule, deren Resonanzfrequenz auf die Übertragungsfrequenz abgeglichen ist. Die Resonanz zwischen den Schwingkreisen führt zu einer verbesserten magnetischen Kopplung zwischen Sende- und Empfangsspule bei der Übertragungsfrequenz, was eine größere Reichweite und einen besseren Wirkungsgrad mit sich bringt. Eine drahtlose Energieübertragung ist damit über eine Distanz in der Größenordnung des 4- bis 10-fachen Spulendurchmessers möglich.

Eine standardisierte Übertragungstechnik, die für die vorliegende Erfindung verwendet werden kann, ist als Qi bekannt. Qi ist ein proprietärer Standard des Wireless Power Consortiums zur drahtlosen Energieübertragung mittels elektromagnetischer Induktion über kurze Distanzen.

Eine Ausführungsform der Erfindung besteht darin, dass Energiesendeeinheit und Energieempfangseinheit ausgebildet sind, dass die Energieübertragung mit einer Frequenz von größer gleich 100 kHz, insbesondere von größer 300 kHz erfolgt.

Die Erfindung umfasst auch die Verwendung einer erfindungsgemäßen Vorrichtung zum Erfassen und Übertragen von Daten eines Lagers eines Stahl- oder Walzwerks. Die Verwendung umfasst somit
- ein Lagergehäuse mit einem Lager für drehbare Bauteile,
- zumindest einen Sensor mit einer Datenverarbeitungseinheit, welche beide im Lagergehäuse angeordnet sind und Daten des Lagers Erfassen und speichern,
- eine Datenübertragungseinheit, welche im Lagergehäuse angeordnet ist und Daten des Sensors drahtlos an einen entfernten Empfänger Überträgt,
- eine Energieempfangseinheit, welche im Lagergehäuse angeordnet ist und welche drahtlos Energie empfängt und (in der Regel kabelgebunden) an die Datenübertragungseinheit und die Datenverarbeitungseinheit weiterleitet,
- eine Energiequelle mit einer Energiesendeeinheit, welche die Energieempfangseinheit drahtlos mit Energie versorgt. Dabei ist vorgesehen,
- dass Energiequelle und Energiesendeeinheit außerhalb eines Lagergehäuses angeordnet sind, und
- dass die Energiesendeeinheit an oder in einem Konstruktionsteil angeordnet ist, der Teil der Stützkonstruktion des Stahl- oder Walzwerks ist, welcher Konstruktionsteil insbesondere ausgebildet ist, bei Ausbau des Lagergehäuses zu Wartungszwecken an der Stützkonstruktion des Stahl- oder Walzwerks zu verbleiben.

Mit der vorliegenden Erfindung können laufend Messwerte von Sensoren im Lagergehäuse von beliebigen Strangführungen an einen Empfänger gesendet werden, was eine laufende Überwachung des Zustands des Lagers bzw. Lagergehäuses von vielen Strangführungen ermöglicht, sodass die Messwerte und daraus abgeleitete Größen in Echtzeit für das Automationssystem (Level 1 und Level 2) eines Stahl- oder Walzwerks zur Verfügung stehen, aber auch für die Überwachung von Abweichungen in der Produktion. Damit können etwa Vorhersagen für zukünftige Ausfälle getroffen oder Wartungsarbeiten geplant werden.

Die Verarbeitung der Messwerte findet in der Regel in einer Datencloud statt, wo die Information über geeignete Software-Anwendungen an Steueranlagen des Stahl- oder Walzwerks und/oder an Betriebspersonal bzw. Betriebs- oder Unternehmensleiter übermittelt wird.

### Kurzbeschreibung der Figuren

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:

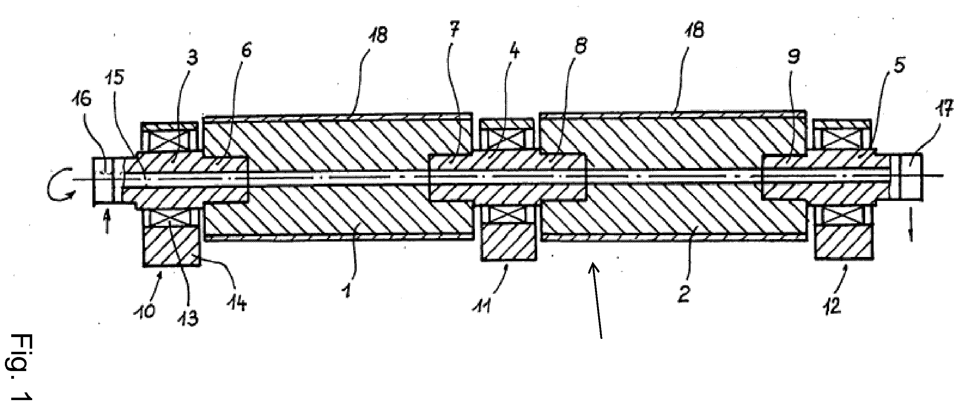

- Fig. 1: eine schematische Ansicht einer Strangführungsrolle im Längsschnitt,

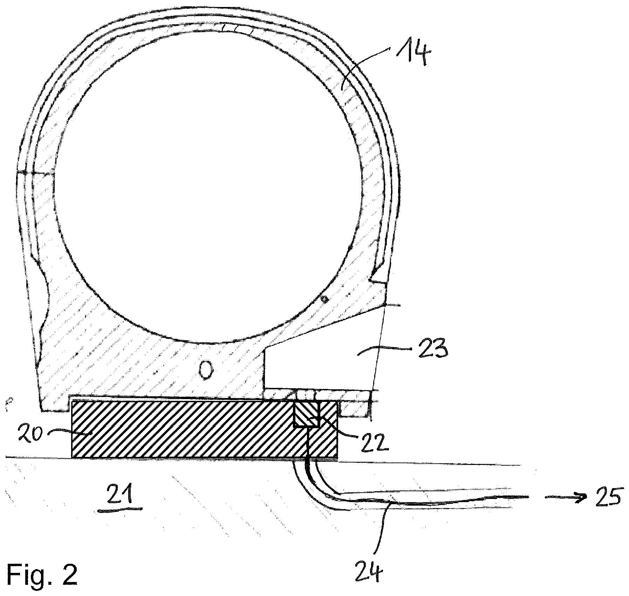

- Fig. 2: einen Querschnitt durch ein Lagergehäuse einer Strangführungsrolle,

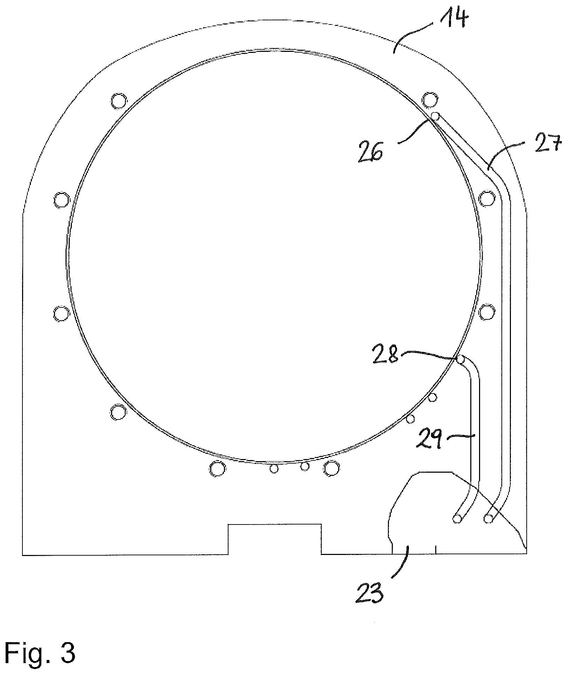

- Fig. 3: die Anordnung von Sensoren im Lagergehäuse.

### Ausführung der Erfindung

Strangführungsrollen 19 werden in einer Stranggießanlage zum Führen und Stützen eines aus einer Stranggießkokille austretenden, zumindest teilerstarrten Metallstranges verwendet und sind als solche in vielen unterschiedlichen Bauarten bekannt. In Abhängigkeit von der Breite des gegossenen Metallstranges sind Strangführungsrollen 19 zweifach oder auch mehrfach gelagert. Unter der Einwirkung des heißen und schweren Metallstranges sind die Strangführungsrollen 19 hohen thermischen und mechanischen Belastungen ausgesetzt, die eine laufende Instandhaltung und damit Wechselarbeiten an der Stranggießanlage erfordern. Fig. 1 zeigt in einer schematischen Darstellung eine dreifach gelagerte Strangführungsrolle 19 wie sie in der Strangführung einer Stranggießanlage verwendet wird und die in der Regel aus Normbauteilen, vorgefertigten Bauteilen und aus teilbearbeiteten Bauteilen hergestellt und montiert ist. Die Strangführungsrolle umfasst hier zwei Rollenmäntel 1, 2, die auf Stützwellen 3, 4, 5 abgestützt sind. Die Stützwellen münden in Stützwellenzapfen 6, 7, 8, 9, die in Ausnehmungen der Rollenmäntel 1,2 ragen und mit diesen eine drehfeste Verbindung bilden. Die Stützwellen 3, 4, 5 sind in Lagereinheiten 10, 11, 12, bestehend jeweils aus einem Wälzlager 13 und einem Lagergehäuse 14 , das auch als Lagerbock bezeichnet wird, abgestützt. Die Strangführungsrolle ist von einem zentralen durchgehenden Kühlmittelkanal 15 durchsetzt und stirnseitig mit Drehdurchführungen 16, 17 für die Zuleitung und Ableitung eines Kühlmittels verbunden. Die Rollenmäntel 1, 2 weisen eine verschleißfeste Oberflächenschicht 18 auf, die die Lebensdauer der Strangführungsrolle erhöht.

Der Aufbau der Strangführungsrolle 19 ist für die vorliegende Erfindung nicht wesentlich, es muss auch keine Kühlung vorhanden sein.

In Fig. 2 ist ein Querschnitt durch ein Lagergehäuse 14 dargestellt. Das Lager 13 ist nicht dargestellt. Das Lagergehäuse 14 ist auf einem Konstruktionsteil 20 aufgesetzt, der hier eine Zwischenplatte ist. Die Zwischenplatte 20 ist an der Stützkonstruktion 21 befestigt. Die Stützkonstruktion 21 kann ein Segment einer Stranggießanlage sein, das mehrere Strangführungsrollen 19 trägt. Das Lagergehäuse 14 bedeckt die Zwischenplatte 20, sodass diese von der Drehachse der Strangführungsrolle 19 aus im Wesentlichen nicht sichtbar ist. Im Fall der Fig. 2 umgreift das Lagergehäuse 14 die Zwischenplatte 20 auch teilweise seitlich.

Im Lagergehäuse 14 ist nahe dessen Unterseite eine Ausnehmung 23 vorgesehen, in welche eine Leiterplatte eingesetzt werden kann, auf welcher die Datenverarbeitungseinheit, also etwa CPU und Speicher, die Datenübertragungseinheit, also etwa die Antenne, und die Energieempfangseinheit montiert sind. Die Leiterplatte hat eine Fläche von weniger als 4000 mm², bevorzugt von weniger als 3000 mm², besonders bevorzugt weniger als 1800 mm² und ist inklusive der darauf befindlichen elektronischen Bauteile weniger als 18 mm hoch, insbesondere weniger als 13 mm hoch, besonders bevorzugt weniger als 9 mm hoch. Die Leiterplatte ist mittels elektrischer Leitungen in Form von Drähten mit den entsprechenden Sensoren verbunden, die an anderer Stelle im Lagergehäuse 14, etwa näher am Lager, angeordnet sind. Sensoren, die auf der Leiterplatte angeordnet sind, stehen mit der Datenverarbeitungseinheit entsprechend über Leiterbahnen der Leiterplatte in Verbindung.

Die Energieempfangseinheit ist, insbesondere auf der Leiterplatte, so angeordnet, dass sie nahe an der Zwischenplatte 20 ist, insbesondere ist die Energieempfangseinheit in jenem Teil der Ausnehmung 23 angeordnet, der einen Durchbruch zur Zwischenplatte 20 darstellt. Die Ausnehmung 23 ist sonst seitlich offen, um die Leiterplatte in das Lagergehäuse 14 einsetzen zu können.

Die Energiesendeeinheit 22 ist in einer Ausnehmung der Zwischenplatte 20 angeordnet, die zum Lagergehäuse 14 hin offen ist. Die Energiesendeeinheit 22 ist mittels einer elektrischen Leitung 24 an die als Energiequelle dienende Batterie 25, die dem Segment der Stranggießanlage zugeordnet ist, angeschlossen.

Wenn das Lagergehäuse 14 zu Wartungszwecken ausgebaut wird, verbleibt die Energiesendeeinheit 22 in der Zwischenplatte 20 und damit an der Stützkonstruktion 21, die Batterie 25, welche dem Antrieb und der Anstellung der Strangführungsrolle 19 dient, verbleibt ohnehin an der Stützkonstruktion 21 bzw. einem sonstigen, dem Segment einer Stranggießanlage zugeordneten Platz.

In Fig. 3 ist ein Schnitt durch ein Lagergehäuse 14 gezeigt. In der Schnittdarstellung ist ein Platz für den ersten Sensor 26 dargestellt sowie eine zugehörige Leiterrille 27, in welcher ein entsprechender Leiter zur Verbindung des ersten Sensors 26 mit der hier nicht dargestellten, in der Ausnehmung 23 angeordneten Leiterplatte zur Signalübertragung verlegt werden kann. Für einen zweiten Sensor 28 ist ebenso eine zugehörige Leiterrille 29 vorgesehen, zur Verbindung des zweiten Sensors 28 mit der hier nicht dargestellten Leiterplatte in der Ausnehmung 23, zum Zwecke der Signalübertragung.

Die Ausnehmung 23 ist nach unten offen, sodass eine induktive Kopplung zwischen der Energiesendeeinheit 22, siehe Fig. 2, und der Energieempfangseinheit erfolgen kann, die in der Ausnehmung 23 angeordnet ist. Die Datenverarbeitungseinheit, die Datenübertragungseinheit und die Energieempfangseinheit sind auf einer gemeinsamen Leiterplatte angeordnet, die hier von unten in die Ausnehmung 23 eingelegt werden kann.

Wenn die Leiterplatte in Fig. 3 waagrecht in die Ausnehmung 23 eingesetzt ist, so wird die Energieempfangseinheit auf der Unterseite der Leiterplatte angeordnet, sodass sie sich nahe an der in Fig. 2 dargestellten Zwischenplatte 20 befindet.

### Bezugszeichenliste:

- 1, 2: Rollenmäntel
- 3, 4, 5: Stützwellen
- 10, 11, 12: Lagereinheiten
- 13: Lager (Wälzlager)
- 14: Lagergehäuse
- 15: Kühlmittelkanal
- 16, 17: Drehdurchführungen
- 18: verschleißfeste Oberflächenschicht
- 19: Strangführungsrolle (drehbarer Bauteil)
- 20: Zwischenplatte (Konstruktionsteil)
- 21: Stützkonstruktion
- 22: Energiesendeeinheit
- 23: Ausnehmung in Lagergehäuse 14
- 24: elektrische Leitung
- 25: Batterie (Energiequelle)
- 26: erster Sensor
- 27: Leiterrille
- 28: zweiter Sensor
- 29: Leiterrille

## Patentansprüche

1. Vorrichtung zum Erfassen und Übertragen von Daten eines Lagers (13) eines Stahl- oder Walzwerks, die Vorrichtung zumindest umfassend
- ein Lagergehäuse (14) für ein Lager (13) für drehbare Bauteile (19),
- einen Sensor mit einer Datenverarbeitungseinheit, welche beide im Lagergehäuse (14) angeordnet sind und zum Erfassen und Speichern von Daten des Lagers (13) ausgebildet sind,
- eine Datenübertragungseinheit, welche im Lagergehäuse (14) angeordnet ist und zum drahtlosen Übertragen von Daten des Sensors an einen entfernten Empfänger ausgebildet ist,
- eine Energieempfangseinheit, welche im Lagergehäuse (14) angeordnet ist und welche ausgebildet ist, drahtlos Energie zu empfangen und an die Datenübertragungseinheit und die Datenverarbeitungseinheit weiterzuleiten,
- eine Energiequelle (25) mit einer Energiesendeeinheit (22), welche ausgebildet ist, die Energieempfangseinheit drahtlos mit Energie zu versorgen, **dadurch gekennzeichnet,**
- **dass** Energiequelle (25) und Energiesendeeinheit (22) außerhalb eines Lagergehäuses (14) angeordnet sind, und
- **dass** die Energiesendeeinheit (22) an oder in einem Konstruktionsteil (20) angeordnet ist, der Teil der Stützkonstruktion (21) des Stahl- oder Walzwerks ist.

2. Vorrichtung nach Anspruch 1, **dadurch gekennzeichnet, dass** der Konstruktionsteil (20) ausgebildet ist, bei Ausbau des Lagergehäuses (14) zu Wartungszwecken an der Stützkonstruktion (21) des Stahl- oder Walzwerks zu verbleiben.

3. Vorrichtung nach Anspruch 1 oder 2, **dadurch gekennzeichnet, dass** die Energiesendeeinheit (22) vom Lagergehäuse (14) bedeckt ist.

4. Vorrichtung nach einem der vorhergehenden Ansprüche, **dadurch gekennzeichnet, dass** die Energieempfangseinheit im Lagergehäuse (14) und die Energiesendeeinheit (22) im Konstruktionsteil (20) jeweils oberflächennahe und nahe zueinander angeordnet sind.

5. Vorrichtung nach einem der vorhergehenden Ansprüche, **dadurch gekennzeichnet, dass** die Energiesendeeinheit (22) in einer Ausnehmung des Konstruktionsteils (20) angeordnet ist, die im Betriebszustand der Vorrichtung zum Lagergehäuse (14) hin ausgerichtet ist.

6. Vorrichtung nach einem der vorhergehenden Ansprüche, **dadurch gekennzeichnet, dass** die Energiequelle (25) eine Batterie eines Segments einer Stranggießanlage oder eine Wechselspannungsversorgung eines Segments einer Stranggießanlage ist, das Segment umfassend eine oder mehrere Strangführungsrollen (19), und mittels einer elektrischen Leitung (24) mit der Energiesendeeinheit (22) verbunden ist.

7. Vorrichtung nach einem der vorhergehenden Ansprüche, **dadurch gekennzeichnet, dass** Energiesendeeinheit (22) und Energieempfangseinheit ausgebildet sind, Energie durch induktive Kopplung, insbesondere resonante induktive Kopplung, zu senden bzw. zu empfangen.

8. Vorrichtung nach einem der vorhergehenden Ansprüche, **dadurch gekennzeichnet, dass** Energiesendeeinheit (22) und Energieempfangseinheit ausgebildet sind, dass die Energieübertragung mit einer Frequenz von größer gleich 100 kHz, insbesondere von größer 300 kHz erfolgt.

9. Vorrichtung nach einem der vorhergehenden Ansprüche, **dadurch gekennzeichnet, dass** die Datenverarbeitungseinheit, die Datenübertragungseinheit und die Energieempfangseinheit auf einer gemeinsamen Leiterplatte angeordnet sind.

10. Vorrichtung nach Anspruch 9, **dadurch gekennzeichnet, dass** die gemeinsame Leiterplatte in einer Ausnehmung des Lagergehäuses (14) angeordnet ist, welche Ausnehmung einen größten Querschnitt von kleiner 4000 mm², bevorzugt von kleiner 3000 mm², besonders bevorzugt von kleiner 1800 mm² aufweist.

11. Vorrichtung nach einem der vorhergehenden Ansprüche, **dadurch gekennzeichnet, dass** die Datenübertragungseinheit ausgebildet ist, Daten mit einer Frequenz von größer gleich 800 MHz, insbesondere von größer gleich 2,4 GHz, an einen entfernten Empfänger zu senden.

12. Verwendung einer Vorrichtung nach einem der Ansprüche 1 bis 11 zum Erfassen und Übertragen von Daten eines Lagers (13) eines Stahl- oder Walzwerks.
